(19) Europäisches Patentamt
European Patent Office
Office européen des brevets

(11) **EP 3 399 502 A1**

(12) **EUROPEAN PATENT APPLICATION**

(43) Date of publication:
**07.11.2018 Bulletin 2018/45**

(51) Int Cl.:
**G06T 15/50** (2011.01)　　　　**G06T 15/60** (2006.01)
**G06T 15/06** (2011.01)　　　　**G06T 19/00** (2011.01)

(21) Application number: **17305496.6**

(22) Date of filing: **02.05.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• LUO, Tao
　**35576 CESSON SEVIGNE CEDEX (FR)**
• JIDDI, Salma
　**35576 CESSON SEVIGNE CEDEX (FR)**
• ROBERT, Philippe
　**35576 CESSON SEVIGNE CEDEX (FR)**

(74) Representative: **Merlet, Hugues et al
InterDigital CE Patent Holdings
1 rue Jeanne d'Arc
92443 Issy-les-Moulineaux (FR)**

(54) **METHOD AND DEVICE FOR DETERMINING LIGHTING INFORMATION OF A 3D SCENE**

(57)　A method and an apparatus for determining lighting information of a 3D scene by determining at least a shadow area of the 3D scene that is casted by at least a real object (11) of the 3D scene; casting a plurality of rays (211, 212, 213) having as origin at least a first pixel (20) of the shadow area (111) through the 3D scene; selecting at least a light source (2001, 2009) of the 3D scene from a plurality of candidate light sources (2001 to 2014), a selected light source corresponding to a light source of the 3D scene crossed by at least one ray (212) of the plurality of rays that also crosses the at least a real object (11); and determining the lighting information according to the selected at least a light source.

Fig 2C

**Description**

**1. Technical field**

The present disclosure relates to 3D scene lighting for mixed reality. More particularly, the present disclosure relates to virtual object lighting inserted into a 3D real scene.

**2. Background**

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In mixed reality, that is when virtual objects are inserted into a 3D model of a real scene, 3D lighting of the virtual objects is a key feature in order to provide a realistic aspect of the 3D scene. The virtual objects should be lighted correctly by imitating the real lighting of the scene. But lighting is a time-consuming task in real-time rendering and need to be drastically simplified particularly when the 3D scene is rendered on a mobile device. Therefore, a compromise must be found between complex modeling and graphics rendering speed.

An important aspect in lighting a virtual object is the quality of rendering the shadows cast by the virtual object onto the real scene. Shadows are important visual cues as they retain valuable information about the location, size and shape of the light sources present in a real scene. The estimation of an environment lighting is a crucial step towards photo-realistic rendering in Mixed Reality applications.

In Arief et al. "Realtime Estimation of Illumination Direction for Augmented Reality on Mobile Devices", CIC 2012, the 3D position of only the strongest direct lighting is estimated using an RGB image of the scene. A 3D marker with known geometry, such as a cube with simple geometry, is used to determine the illumination direction by analyzing the shadow of the 3D marker. However, with this method, the direction of a single dominant light source is estimated and the method requires cast shadows with distinct contours in the scene.

Related methods generally consider distant lighting, and neglect the effect of the 3D position of the source light, especially in indoor environments. Furthermore, even when the 3D position is considered, the lighting is generally reduced to a single point light.

Therefore, there is a need for a fast method that can model more complex indoor scene light sources (e.g. spot lights and area lights).

**3. Summary**

References in the specification to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a method of determining lighting information of a 3D scene, the method comprising:

- determining at least a shadow area of the 3D scene, the at least a shadow area being casted by at least a real object of the 3D scene;
- for at least a first pixel of said at least a shadow area, casting a plurality of rays having as origin the at least a first pixel through the 3D scene;
- selecting at least a light source of the 3D scene from a plurality of candidate light sources, a selected light source corresponding to a light source of the 3D scene crossed by at least one ray of the plurality of rays, the at least one ray crossing the at least a real object; and
- determining the lighting information according to the selected at least a light source.

The present disclosure also relates to an apparatus configured to determine lighting information of a 3D scene, the apparatus comprising a memory associated with at least one processor configured to:

- determine at least a shadow area of the 3D scene, the at least a shadow area being casted by at least a real object of the 3D scene;

- for at least a first pixel of said at least a shadow area, cast a plurality of rays having as origin the at least a first pixel through the 3D scene;
- select at least a light source of the 3D scene from a plurality of candidate light sources, a selected light source corresponding to a light source of the 3D scene crossed by at least one ray of the plurality of rays, the at least one ray crossing the at least a real object; and
- determine the lighting information according to the selected at least a light source.

The present disclosure also relates to an apparatus configured to determine lighting information of a 3D scene, the apparatus comprising

- means for determining at least a shadow area of the 3D scene, the at least a shadow area being casted by at least a real object of the 3D scene;
- for at least a first pixel of said at least a shadow area, means for casting a plurality of rays having as origin the at least a first pixel through the 3D scene;
- means for selecting at least a light source of the 3D scene from a plurality of candidate light sources, a selected light source corresponding to a light source of the 3D scene crossed by at least one ray of the plurality of rays, the at least one ray crossing the at least a real object; and
- means for determining the lighting information according to the selected at least a light source.

According to a particular characteristic, the 3D scene comprises a first determined number of light sources, the at least a light source being selected from the first determined number of light sources, rays being casted from a second determined number of first pixels of the at least a shadow area, the second determined number being greater than or equal to the first determined number, the method further comprising (and the apparatus being further configured for):

- for each selected light source, generating a visibility map comprising information on visibility of each first pixel from the selected light source;
- for each first pixel, determining at least a second pixel of the 3D scene having a same reflectance property as the first pixel and belonging to an area of the 3D scene that is not in shadow;
- determining light intensity of the selected at least a light source based on the visibility maps and on a ratio between a first value representative of luminance associated with each first pixel and a second value representative of luminance associated with the at least a second pixel.

According to another characteristic, the determining of at least a shadow area comprises:

- for each pixel of at least a part of pixels located in an area surrounding the at least a real object, determining at least a corresponding pixel of the 3D scene having a same reflectance property as each pixel and being located outside the area;
- for said each pixel, determining a ratio between a value representative of luminance associated with each pixel and a second value representative of luminance associated with the at least a corresponding pixel;
- determining the at least a shadow by classifying each pixel according to the determined ratio, each pixel belonging to the at least a shadow when the ratio is less than 1.

According to a specific characteristic, the method further comprises (and the apparatus is further configured for), for each selected light source:

- rendering shadow generated by the selected light source and the at least a real object;
- maintaining the light source as selected when the shadow generated by the light source corresponds to the determined shadow area, otherwise discarding the light source.

According to a particular characteristic, the at least a shadow area is determined according to a light variant feature and a light invariant feature associated with points of at least a region of interest of the 3D scene.

According to another characteristic, the method further comprises (and the apparatus is further configured for) inserting a virtual object at a determined position within the 3D scene and rendering a shadow casted by the virtual object according to the determined position and the lighting information

The present disclosure also relates to a computer program product comprising program code instructions to execute the steps of the abovementioned method, when this program is executed on a computer.

The present disclosure also relates to a (non-transitory) processor readable medium having stored therein instructions for causing a processor to perform at least the abovementioned method.

## 4. List of figures

The present principles will be better understood, and other specific features and advantages will emerge upon reading the following description, the description making reference to the annexed drawings wherein:

- figures 1A shows an image of a 3D scene and figure 1B shows the 3D model of the 3D scene of figure 1A, in accordance with examples of the present principles;
- figures 2A, 2B and 2C show operations of a process for determining light sources lighting the 3D scene of figure 1A, in accordance with examples of the present principles;
- figure 3 shows a method of determining lighting information associated with the 3D scene of figure 1A, in accordance with an example of the present principles;
- figure 4 shows a method of determining light intensity of the light sources lighting the 3D scene of figure 1A, in accordance with an example of the present principles;
- figure 5 shows a method of identifying the shadow area(s) of the 3D scene of figure 1A, in accordance with an example of the present principles;
- figure 6 shows the structure of an apparatus adapted to implement the process of figures 2A to 2C and/or the method of figure 3, 4 and/or 5, in accordance with an example of the present principles.

## 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

The present principles will be described in reference to a particular embodiment of a method of (and apparatus configured for) determining lighting information of a 3D scene. One or more shadow areas of the 3D scene are identified, for example by analyzing one or more images of the 3D scene. The shadow area(s) is (are) casted by one or more real objects of the 3D scene. A shadow area is a part of the 3D scene that appears darker than other parts of the 3D scene. A shadow is casted by an object on a surface of the 3D scene as this object occludes at least a part of the light reaching the surface. One or more first pixels of the shadow areas are used to be the origin of rays traced through the scene, a plurality of rays being traced (or launched or casted) for each first pixel. A set of candidate light sources (e.g. point light sources and/or area light sources). A candidate light source corresponds to a light source that may be potentially selected to be a light source used to model the lighting environment of the 3D scene. A candidate light source is selected when it is crossed by a ray casted from at least one of the first pixels, when said ray also crosses the real object casting the shadow comprising the first pixel being the origin of said ray. The selected light source(s) provide a first information on the lighting of the 3D scene by providing the location of the light source(s).

Determining the location of the light source(s) that light the 3D scene enables to compute how a virtual object that is inserted in the 3D scene is lighted and which shadow(s) this virtual object may cast on surface(s) of one or more real objects of the 3D scene, thus improving the realism of the augmented-reality scene.

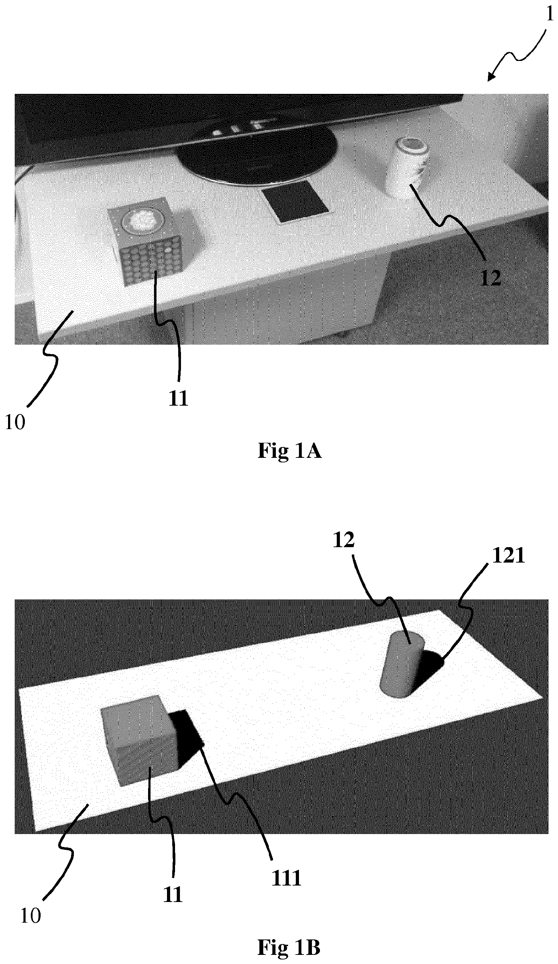

**Figures 1A** show an image of a 3D scene 1, according to a particular and non-limitative embodiment of the present principles. The 3D scene 1 comprises a plurality of real objects 10, 11 and 12, for example a cube 11 and a can 12 arranged on a plane 10 of a table. The image is acquired according to a determined point of view.

**Figure 1B** shows a part of the 3D model of the 3D scene 1, according to a particular and non-limitative embodiment of the present principles. The part of the 3D model comprises a representation of the real objects 10, 11 and 12. The shadow areas 111 and 121 casted by the real objects 11 and 12 on the plane 10 are shown with black pixels. The shape of the shadows 111 and 121 depends on the location of the light sources in the space (framework) of the 3D scene, the location of real objects in the space of the 3D scene and the point of view of the 3D scene. The geometry, i.e. location and size of the real objects, of the 3D scene is known (e.g. stored on a memory device) or may be determined (e.g. with depth sensors associated with the camera used to acquire images of the 3D scene according to different points of view). The pose information (i.e. orientation and position) of the camera used to acquire the image(s) of the 3D scene is also known and defined in the space (framework) of the 3D scene.

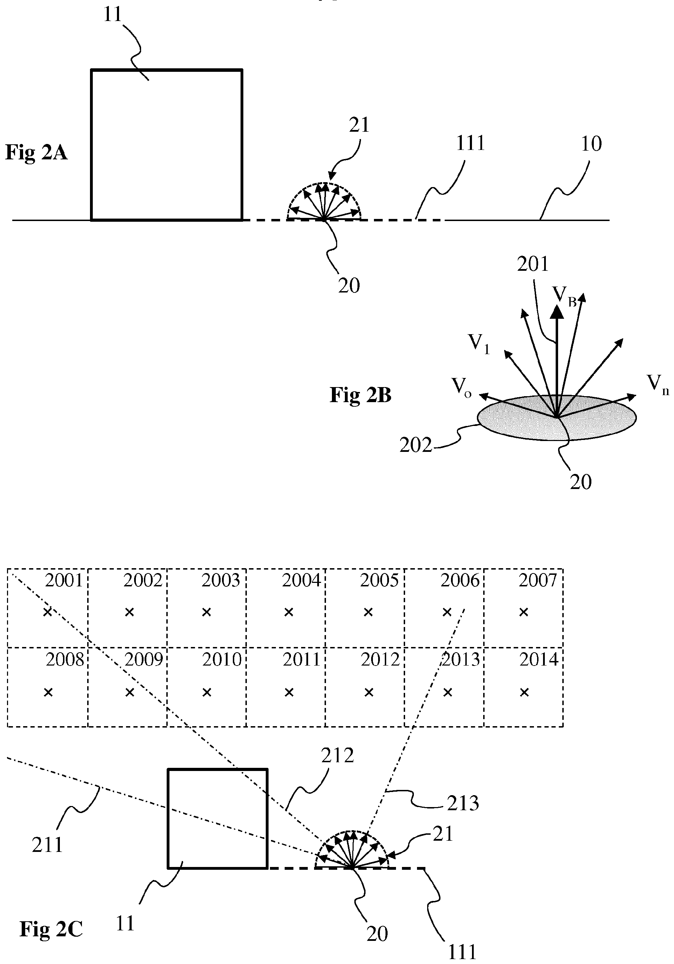

**Figures 2A, 2B and 2C** show operations performed to determine lighting information of the 3D scene, according to a particular and non-limitative embodiment of the present principles. The lighting information comprises for example one or any combination of the following information:

- position (coordinates in the space of the 3D scene) of each of the light source lighting the 3D scene;

- orientation (e.g. main direction) of the light beam generated by each of the light source; and
- light intensity of each of the light source.

**Figure 2A** illustrates a part of the 3D scene 1 according to a point of view that is different from the point of view of the figures 1A and 1B and in 2 dimensions only, for clarity purpose of illustration. Only one real object 11 is illustrated on figure 2A, the shadow area 111 casted by this real object 11 being shown with dash lines, the shadow area 111 being a part of the plane 10. A first pixel 20 of the shadow area 111 is shown with a set 21 of rays casted from this first pixel 20. The rays are shown with arrows on figure 2A and forms a hemisphere around the first pixel 20.

**Figure 2B** illustrates an example of a set of rays casted or launched from the first pixel 20, or the directions/vectors $V_0$, $V_1$ and $V_n$ associated with these rays. The vector $V_B$ 201 corresponds to the normal vector associated with the first pixel 20, i.e. the vector that is orthogonal to a surface element 202 associated with the first pixel 20, for example a disk centered on the first pixel 20, the points or pixels of the disk belonging to the shadow area (and to the plane 10). The rays are casted in such a way as to not cross the plane 10, i.e. all rays extend above the plane 10. The ray directions $V_0$, $V_1$ and $V_n$ may be determined by means of a polar angle and an azimuth angle with respect to a representation system comprising a reference surface 202 (e.g. the base of the hemisphere) and an oriented normal $V_B$ 201 to this reference surface 202. In convenient embodiments, the polar and azimuth angles range respectively from -90° to +90° and from 0° to 360°.

The same operations may be performed for a plurality of first pixels that all belong to the shadow area 111. For example, a set of rays may be casted from each first pixel of the shadow area 111. According to another example, a set of rays may be casted from each first pixel of a part of the first pixels forming the shadow area, e.g. for one first pixel over 5 or 10 first pixels. As it will be explained hereinafter with more details, the number of first pixels for which rays are casted may depend from the number of candidate light sources that is set for determining the lighting information of the 3D scene. The number of rays casted for each first pixel is for example the same for each first pixel. According to another example, the number of rays casted varies from a first pixel to another first pixel, the directions associated with the rays may be different from a set of rays (associated with a given first pixel) to another set of rays (associated with another first pixel).

**Figure 2C** illustrates the part of the 3D scene 1 illustrated with regard to Figure 2A with a set of candidate light sources 2001 to 2014 arranged in the space of the 3D scene, according to a non-limiting example. Point light sources (illustrated with the crosses on Figure 2C) may be arranged in the free space of the 3D scene, i.e. in the areas of the 3D scene that are not occupied by an object. According to another example, the point light sources may be arranged above a detected principle plane of the 3D scene, e.g. the plane 10, to reduce the number of candidate light sources and the computation costs. The point light sources may be for example uniformly distributed. To reduce the computation costs, a volume of the 3D scene may be associated with each point light source to form the candidate light sources 2001 to 2014, each candidate light source corresponding for example to a voxel and being defined with the 3D position of the point light source (e.g. the centroid of the voxel) and an occupying volume. Each candidate light source 2001 to 2014 may be represented by a voxel with its center at the 3D position of the associated point light source and a cubic volume where the edge is equal to the lighting space discretization step. To select the light sources of the 3D space, among the candidate light sources 2001 to 2014, that generate at least a part of the shadow area (i.e. the part of the shadow area comprising the first pixel 20), the set of rays 21 is casted as explained with regard to figures 2A and 2B. Some of the rays 211, 212 and 213 are illustrated with dash dot lines extending through the 3D scene from the first point 20. To select a candidate light source, only the rays that intersect the real object 11 are considered, i.e. the rays 211 and 212. The candidate light sources 2001, 2009 that are selected correspond to the candidate light sources that are crossed or intersected by at least one of the rays 211, 212, i.e. the ray 212 in the example of figure 2C. The same process may be reiterated for a plurality of first pixels of the shadow area 111 and a set of selected light sources is obtained, the set of selected light sources forming the light sources of the 3D scene that generate the shadows of the 3D scene 1.

The lighting information may comprise the position of the selected light source, e.g. the 3D coordinates of the center of the voxel representing the selected light source. According to a variant, the main direction of the beam of light generated by a selected light source may be obtained from the directions associated with the ray(s) intersected the selected light source. For example, of the selected light source is intersected by only one ray, the main direction of the beam may be determined as being the direction of this ray. If several rays intersect the selected light source (originating from one or several first pixels), the main direction of the beam may be determined as being the average direction of all directions associated with these rays.

Knowing the position of the light sources that light the 3D scene enables to determine how to light a virtual object inserted in the 3D scene (according to the position of this virtual object within the 3D scene) and where to generate the shadow(s) casted by this virtual object. If the light intensity of the selected light sources is not known, a determined or default light intensity may be associated with them.

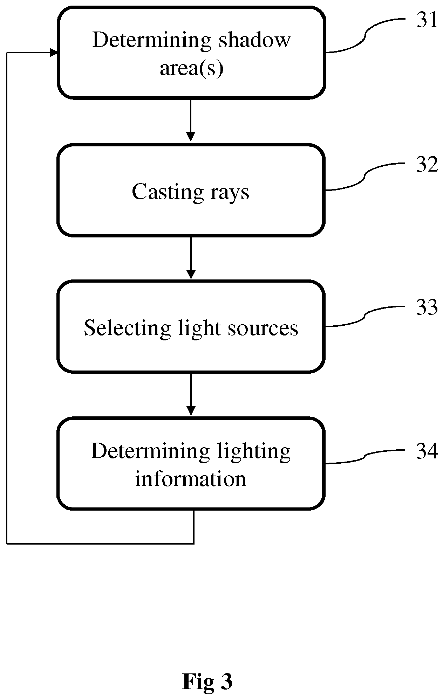

**Figure 3** shows a method of determining lighting information of the 3D scene 1 or of at least a part of the 3D scene 1, according to a particular and non-limitative embodiment of the present principles.

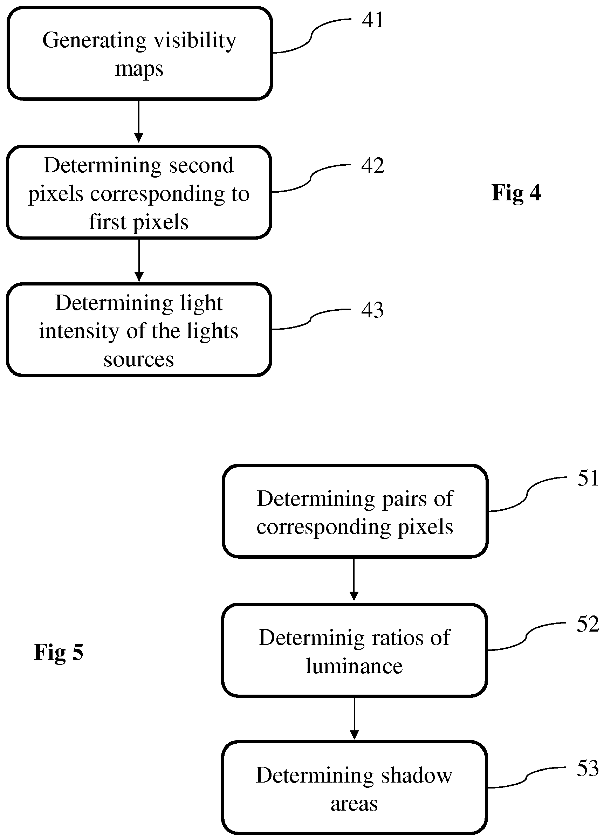

In an operation 31, one or more shadow areas of the 3D scene 1 (or part of the 3D scene) are determined (i.e. detected or identified), e.g. in one or more images of the 3D scene 1. The shadow areas correspond to part of the scene that are at least partially occluded by one or more objects of the 3D scene 1, the one or more objects being positioned between the shadows areas and one or more light sources of the 3D scene. The shadow areas may be detected by image analysis according to any method known by the skilled person in the art. Known methods are for example discussed in the article "A Survey on Shadow Detection Methods" by Singh et al., in International Journal of Advanced Research in Computer Engineering & Technology, Volume 3, Issue 4, April 2014. According to an optional variant, the shadow areas are detected according to the method described with regard to figure 4 hereinafter.

In an operation 32, a set of rays is casted or launched through the 3D scene for each first pixels of a set of first pixels belonging to the detected shadow area(s). For a first pixel, each ray of the associated set is casted from said first pixel, meaning that each ray of a set associated with a given first pixel has as origin the given first pixel. A set of rays may for example be launched for each first pixel of the shadow area(s). According to another example, the shadow is discretized according to a determined discretization step and the number of first pixels depends on the determined discretization step. According to a further advantageous example, the number of first pixels from which rays are casted is greater than or equal to the number of candidate light sources. The rays are casted in such a way to go through the 3D scene above the surface to which the first pixels belong.

In an operation 33, one or more light sources of the 3D scene 1 are selected among a plurality of candidate light sources, as described with regard to figure 2C. A light source that is selected corresponds to a candidate light source that is intersected by at least a ray that itself intersects the real object casting the shadow the first pixel that is the origin of the at least a ray belongs to.

In an operation 34, lighting information or at least partial lighting information associated with the 3D scene is determined from the selected light source(s). The lighting information may correspond to the position of the light source(s) in the 3D scene according to this specific embodiment. According to a variant, the lighting information may comprise the position of the light source(s) and the main direction of the beam of light generated by the light source(s), as described with regard to figure 2C.

According to an optional variant, the method further comprises the adding of one or more virtual objects within the 3D scene at determined position(s), the coordinates associated with the added virtual object(s) being expressed in the space of the 3D scene. The shadow casted by the inserted virtual object(s) is determined and rendered according to the determined lighting information and the determined position(s) of the virtual object(s). Knowing the position(s) of the light source(s) in the 3D scene (i.e. knowing the coordinates of the light source(s) in the space of the 3D scene) and knowing the position(s) of the virtual object(s) in the 3D scene, the determination of the pixels that are occluded by the virtual object(s) with regard to the light sources is straightforward. The shadow may for example be obtained by tracing rays from the light sources through the scene to determine the area(s) of the scene occluded by the added virtual object(s). The attenuation of the light that reaches a pixel of the shadow of the virtual object may be determined according to the number of light sources that light said pixel of the shadow, an occlusion factor being associated with each pair pixel/light source, the occlusion factor taking the value 1 when the pixel is visible from a light source and 0 when the pixel is not visible from the light source.

According to a further optional variant, the method further comprises recovering a diffuse map of the 3D scene in which shadows effects have been removed, as if the 3D scene was lit by only ambient lighting.

According to a further optional variant, the selected light sources are tested by rendering the shadow generated by the real object(s) lit by the selected light sources, for each light source. This may be obtained by tracing rays from the selected light sources through the scene to determine the areas of the 3D scene occluded by the real object(s). The thus obtained shadow areas are compared with the shadow areas identified (or detected) within the scene in operation 31. If the rendered shadow perfectly matches the identified shadow area, this means that the selected light source is well positioned and the selected light source is maintained as selected. If the rendered shadow does not perfectly match the identified shadow, i.e. if at least a part of the rendered shadow extends beyond the limit of the detected shadow, then the selected light source is discarded from the set of selected light source as it means that this light source generates some errors with regard to the shadow it may render. According to another embodiment, to detect whether some of light sources of the set of selected light sources obtained in operation 33 candidates produce shadow maps that cover regions that are not detected as shadows, spatial constraints are set. To reach that aim, one may compute a correlation coefficient between the mask of detected real shadows and the rendered shadow maps. Hence, only light sources with high correlation coefficient value are kept. According to a variant to reach the same aim, following operations may be performed:

a) define a region of "uncertain" around the initially detected shadow. Indeed, in case of soft shadows, penumbra points might not be detected as shadows;
b) define a set of visible points around the region of uncertainty; and
c) If a selected light source produces a shadow map where a point in the set defined in b) is in shadow, this light source is discarded from the set of selected light sources.

**Figure 4** shows a method of determining light intensity to be associated with the selected light sources of the 3D scene 1 (or of at least a part of the 3D scene 1), according to a particular and non-limitative embodiment of the present principles.

In an operation 41, a visibility map is generated for each selected light source of the 3D scene. To reach that aims, rays are casted from each selected light source toward each first pixel of the shadow areas. When the light source is defined as occupying the volume of a voxel, the rays may be launched from the center of the voxel for example. For example, for a given selected light source i, if a ray reaches a first pixel $P_j$ without intersecting any object of the scene (i.e. any occluding object of the scene), then the first pixel is visible $P_j$ from the given light source i. An occlusion factor

$$O_i^{P_j}$$

with a value equal to 1 is assigned to the first pixel $P_j$ in the visibility map of the selected light source i. For the same given selected light source i, if a ray does not reach a first pixel $P_{j+1}$ because it intersects an object of the 3D scene (i.e. an occluding object of the scene), then the first pixel $P_{j+1}$ is not visible from the given light source i. An occlusion factor $O_i^{P_{j+1}}$ with a value equal to 0 is assigned to the first pixel $P_{j+1}$ in the visibility map of the selected light source i. The same process is reiterated for all first pixels for the selected light source i to obtain the visibility map associated with the selected light source i. A visibility map comprises an array of occlusion factors equal to 0 or 1 each associated with a first pixel of the shadow areas. The same process is reiterated for all selected light sources to obtain a visibility map associated with each selected light source.

In an operation 42, one or more second pixels are associated with each first pixel, meaning that for a given first pixel $P_j$, one or more corresponding second pixels $Q_j$ are associated with this given first pixel $P_j$. The first pixel $P_j$ and corresponding second pixel(s) $Q_j$ belong to a same surface of an object of the 3D scene and have the same reflectance properties. But while the first pixel $P_j$ belongs to a shadow area, the corresponding second pixels $Q_j$ do not belong to a part of the surface that is a shadow, i.e. the corresponding second pixels $Q_j$ belong to a part of the surface that is lit by all the selected light sources. To determine the second pixel(s) $Q_j$ corresponding to the given first pixel $P_j$, several candidate second pixels that belong to the same surface as the given first pixel and that are lit by the selected light sources may be tested by checking similarity features. Similarity features that express similar reflectance between P and Q are evaluated. Several similarity features may be used to produce one value of similarity for the pair (P, Q) or only one similarity feature may be used. For instance, similarity features used for matching pairs of pixels may correspond to chromaticity values, color intensity values, Modified Specular Free (MSF) chromaticity value, coplanarity of normal vectors $\vec{N}(p)$ and $\vec{N}(q)$ at 3D points corresponding to pixels P and Q (for example by excluding second pixels Q for which normal vector $\vec{N}(q)$ is too far from normal vector $\vec{N}(p)$ of first pixel P, that is a second pixel Q is excluded if

$$\left(\vec{N}(p).\vec{N}(q)\right) < Th,$$ where *Th* is a predetermined threshold, depth of the 3D points in the scene, 2D pixel distance. A similarity value for each pair of pixels (P, Q) is computed from the similarity features by computing differences between similarity features at first pixel P and similarity features at second pixel Q. Some features such as '2D pixel distance' or 'coplanarity' reduce the potential error introduced by neglecting the effect of the orientation of the surface the first and second pixels belong to. Then, among all candidate second pixels Q in the 'visible' area, the most similar candidate(s) with respect to pixel P may be chosen.

In an operation 43, a ratio $\delta(P)$ is determined for each first pixel P, the ratio corresponding to a ratio between a first value representative of luminance of the considered first pixel P and a second value representative of luminance associated with the corresponding second pixels Q (e.g. the mean value of the luminance values associated with the second pixels). Light intensity to be associated with each selected light source is determined based on the values of the occlusion factors contained in the visibility maps and on the ratios $\delta(P)$ associated with the first pixels.

For example, considering the case of Lambertian surfaces, one possible reflection model used to describe the way a point (e.g. a first pixel P) on a surface reflects light is the Phong Model:

$$I^P = k_d^P L_a + \sum_{i=1}^{M}[k_d^P L_i (N^P . \omega_i^P) O_i^P] \tag{1}$$

where $I^P$ is the color intensity of point/pixel P, $k_d^P$ is its diffuse reflectance parameter, $L_a$ is the ambient lighting intensity, $L_i$ is the intensity of light source 'i', $N^P$ is the normal vector of point/pixel P, $\omega_i^P$ is its light direction vector, and M is the number of light sources of the 3D scene. $O_i^P$ is the occlusion value/factor and it may be a binary parameter that is equal to 1 if light source 'i' is visible from the point/pixel P and equal to 0 if occluded.

In the following, the effect of the orientation of the surface comprising the shadow area(s) with respect to the light source directions is neglected. Equation (1) may then be simplified:

$$I^P = k_d^P[L_a + \sum_{i=1}^{M} L_i O_i^P] \qquad (2)$$

Pairs of first and second pixels have been selected as described hereinabove with regard to operation 42, pairs of points/pixels having same albedo (i.e. same reflectance properties and/or same intrinsic color values) and differing in terms of visibility with regard to lighting. Considering a point p detected as a shadow pixel and having a corresponding visible point $\hat{p}$:

$$\begin{cases} I^p = k_d[L_a + \sum_{i=1}^{M} L_i O_i^p] \\ I^{\hat{p}} = k_d[L_a + \sum_{i=1}^{M} L_i] \text{ as } O_i^{\hat{p}} = 1 \end{cases} \quad i \in [1, M] \qquad (3)$$

Considering the ratio δ(p) of values representative of luminance (or color intensities) of both points p and $\hat{p}$, it is obtained:

$$\delta(p) = \frac{I^p}{I^{\hat{p}}} = \frac{L_a + \sum_{i=1}^{M}(L_i O_i^p)}{L_a + \sum_{i=1}^{M} L_i} \qquad (4)$$

For an ideal lit white Lambertian point, its color intensity (luminance) I = (1, 1, 1)$^T$. As its diffuse reflectance property $k_d$ = I = (1, 1, 1)$^T$, it is set $L_a + \sum_{i=1}^{M} L_i = 1$, in order for the reflection model to hold true. Subsequently, for each shadow point p, a set of linear equations is obtained:

$$\begin{cases} L_a + \sum_{i=1}^{M}(L_i O_i^{p_1}) = \delta(p_1) \\ L_a + \sum_{i=1}^{M}(L_i O_i^{p_2}) = \delta(p_2) \\ \vdots \\ L_a + \sum_{i=1}^{M}(L_i O_i^{p_N}) = \delta(p_N) \end{cases} \Rightarrow \text{AL} = \delta \qquad (5)$$

With the number of equations has to be equal to or greater than the number M of unknowns, i.e. the number N of points p has to be equal to or greater than the number M of unknowns, and where

$$A = \begin{bmatrix} 1 & O_1^{p_1} & O_2^{p_1} & \dots & O_M^{p_1} \\ 1 & O_1^{p_2} & O_2^{p_2} & \dots & O_M^{p_2} \\ \vdots & \vdots & \vdots & \ddots & \vdots \\ 1 & O_1^{p_N} & O_2^{p_N} & \dots & O_M^{p_N} \end{bmatrix}; L = \begin{pmatrix} L_a \\ L_1 \\ \vdots \\ L_M \end{pmatrix}; \delta = \begin{pmatrix} \delta(p_1) \\ \delta(p_2) \\ \vdots \\ \delta(p_N) \end{pmatrix} \qquad (6)$$

**A** is an N x (M+1) matrix computed using shadow maps (also called visibility maps) corresponding to the selected M candidate light sources. **L** is an N x 1 vector and represents luminance ratio observations (or intensity ratio observations) from detected shadow pixels, i.e. pixels belonging to shadow area(s). δ is an (M+1) x 1 vector containing unknown lighting intensities. The linear system (5) may be solved using Linear Least Squares with bounds and equality constraints:

$$\hat{L} = \min_L \left( \frac{1}{2} \, \|AL - \delta\|^2 \right) \; such \; that: \begin{cases} 0 \le L \le 1 \\ L_a + \sum_{i=1}^{M} L_i = 1 \end{cases} \qquad (7)$$

A reweighted Least Square similar approach may be followed to lower the sensitivity of fitting data to outliers that might originate from bad registration errors between image and geometric model or shadow detection thresholding noise. Subsequently, within an iterative approach, the linear system may be solved as suggested in (7), the residuals and their corresponding weights may be computed using Tukey's bisquare loss function. Finally, points with small weights are marked as outliers and removed from the linear system (5) for the next iteration.

**Figure 5** shows a method of identifying the shadow area(s) of the 3D scene (or of at least a part of the 3D scene 1), according to a particular and non-limitative embodiment of the present principles.

In an operation 51, areas surrounding the one or more real objects of the 3D scene are identified through analysis of the image(s) of the 3D scene. An area surrounding a real object may be for example a disk having a determined radius expressed in a number of pixels, e.g. 10, 100 or 1000 pixels. According to a variant, the area surrounding a real object may be a square or any other shape. For each pixel of the identified area (or for each pixel of a part of the pixels of the identified area(s), the number of pixels depending for example on the discretization step used to parse the identified area(s)), one or more corresponding pixels are determined in areas of the image that are different from the identified areas surrounding the real object(s). A pixel located outside the identified area corresponds to a pixel located inside the identified area when both pixels have a same reflectance property. For example, to determine the pixel(s) V corresponding to a given pixel U that belongs to an identified area surrounding a real object, several candidate pixels V' that belong to the same surface as the given pixel U may be tested by checking similarity features. Similarity features that express similar reflectance between U and V' are evaluated. Several similarity features may be used to produce one value of similarity for the pair (U, V') or only one similarity feature may be used. For instance, similarity features used for matching pairs of pixels may correspond to chromaticity values, color intensity values, Modified Specular Free (MSF) chromaticity value, coplanarity of normal vectors N(U) and N(V') at 3D points corresponding to pixels U and V' (for example by excluding candidate corresponding pixels V' for which normal vector N(V') is too far from normal vector N(U) of the given pixel U, that is a candidate corresponding pixel V' is excluded if N(U).N(V') < *Th,* where *Th* is a predetermined threshold, depth of the 3D points in the scene, 2D pixel distance. A similarity value for each pair of pixels (U, V') is computed from the similarity features by computing differences between similarity features at the given pixel U and similarity features at candidate corresponding pixel V'. Some features such as '2D pixel distance' or 'coplanarity' reduce the potential error introduced by neglecting the effect of the orientation of the surface the pair of pixels belong to. Then, among all candidate second pixels V' in the area outside the identified area(s), the most similar candidate(s) with respect to pixel U may be chosen.

In an operation 52, a ratio δ(U) is determined for each pixel U of the identified area(s), the ratio corresponding to a ratio between a first value representative of luminance of the considered pixel U and a second value representative of luminance associated with the corresponding pixels V (e.g. the mean value of the luminance values associated with the corresponding pixels).

In an operation 53, a shadow area is identified by classifying each pixel U according to the determined ratio δ(U), the pixel U belonging to a shadow area when the ratio δ(U) is less than 1 and the pixel U not belonging to the shadow area otherwise, i.e. when δ(U) ≥ 1.

One difficulty associated with shadow detection in one or more images of a 3D scene is due to the complex interactions of geometry, reflectance, and illumination. If only local texture and color features are considered, it is not possible to accurately separate texture/albedo and illumination. Hence, to reliably determine if a pixel is in shadow, this pixel has to be compared to other pixels that have the same reflectance properties and orientation.

According to a further specific embodiment, a shadow may be detected as described hereinbelow. First, the 3D geometric model of the scene may be segmented into a set of 3D clusters. Specifically, surface normals may be computed and a region growing algorithm may be applied to cluster similarly oriented surfaces together using a range of normals allowed deviation. Then, a RANSAC estimator may be used to fit data to a planar surface model. Data above the detected plane is clustered into a set of 3D objects using Euclidean distance within a KdTree structure. Furthermore, as shadows are caused by the occlusion of light due to occluding geometry, a region of interest (ROI) may be defined around each detected 3D objects as it represents a potential light occluder. A proportional spherical bounding volume is computed for each object and the intersection between the set of spheres and principle plane provides a potential 3D region where shadows can be located.

Finally, ROI labels are re-projected on camera plane in order to compare inside-region points and outside-region points using shadow-variant and shadow-invariant features (see the detailed algorithm provided hereinbelow in Table 1). The Modified Specular Free image is computed, for example as described in "Learning to recognize shadows in monochromatic natural images" by J. Zhu, K.G.G. Samuel, S.Z. Masood and M.F. Tappen, in CVPR, 2000, which allows to handle weak specular reflections that might be encountered. Furthermore, the chromaticity of the MSF image may be considered as the shadow-invariant feature since the apparent color remains constant by eliminating the effect of varying intensities from lighting throughout the scene. As far as shadow-variant features, the value channel of the HSV color space may be used as it represents the brightness of a surface due to difference in lighting conditions. Finally, a voting scheme is applied and points with high voting values are detected as shadows. The outputs of the algorithm are a mask of detected shadows and an attenuation value $\delta(U)$ for all shadow points U. $\delta(U)$ is computed as the ratio of brightness of a shadow/occluded points U and mean brightness of corresponding visible points. The latter will be used to recover the illumination distribution.

---

**Data:** ROI mask + RGB image of the scene
**Result:** Detected real shadows + $\delta(p)$ for all shadow points $p$
Conversion to HSV color space; $V^p$ is the Value of point $p$ ;
Computation of Modified Specular Free (MSF) chromaticity $C^p$ ;
**for** *point* $p \in ROI$ **do**
    **for** *point* $\hat{p} \notin ROI$ **do**
        **if** $abs(C^p - C^{\hat{p}}) \leq Th_C$ **then**
            **if** $V^{\hat{p}} - V^p \geq Th_V$ **then**
                $voteMap(p) = voteMap(p) + 1$ ;
                $sumOfV(p) = sumOfV(p) + V^{\hat{p}}$ ;
            **end**
        **end**
    **end**
    $V_{mean} = \frac{sumOfV(p)}{voteMap(p)}$ ;
    $\delta(p) = \frac{V^p}{V_{mean}}$ ;
**end**
Detected real shadows = normalized $(voteMap())$;

---

Table 1

Shadow detection provides binary pixel labels. Nonetheless, illumination often changes gradually across shadow boundaries especially in indoor scenes where lighting is not distant and composed of spot lights and area lights. Subsequently, an unconstrained region may be further defined where pixels might be totally occluded, partially occluded or visible with regard to lighting. An opening morphological operation may be used to remove noise due to thresholding sensitivity in the shadow mask and define the unconstrained region. For all pixels that belong to this region, the attenuation parameter $\delta(U)$ may be additionally computed. If attenuation is found to be less than 1, the point is added to the shadow mask, otherwise it is set as a visible point. Finally, points that lay on the other side of this region are considered as visible.

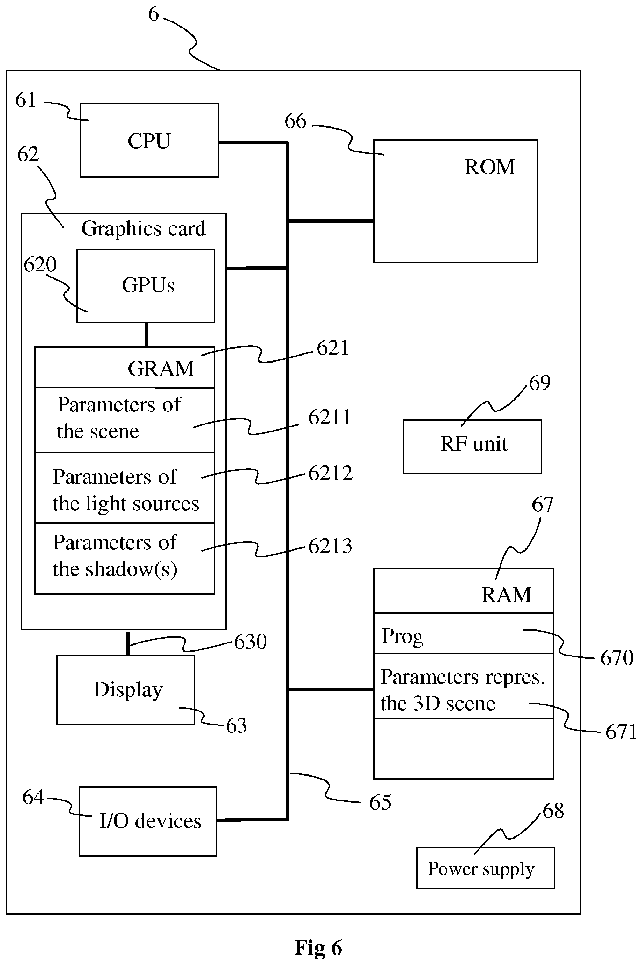

**Figure 6** diagrammatically shows an exemplary hardware embodiment of an apparatus 6 configured for determining lighting information of a 3D scene, and/or determining (i.e. detecting or identifying) shadows areas in a 3D scene, and/or rendering, compositing and/or transmitting one or more images of the 3D scene by for example adding virtual objects to get an augmented reality scene. The device 6 may also be configured for the creation of display signals of the one or more images. The device 6 may correspond for example to a tablet, a Smartphone, a games console, a computer, a laptop, a Set-top box, the computing or controlling apparatus of a HMD (Head-Mounted Display).

The apparatus 6 comprises the following elements, connected to each other by a bus 65 of addresses and data that also transports a clock signal:

- a microprocessor 61 (or CPU) ;
- a graphics card 62 comprising:

    • several Graphical Processor Units (or GPUs) 620,
    • a Graphical Random Access Memory (GRAM) 621;

- a non-volatile memory of ROM (Read Only Memory) type 66;
- a Random Access Memory or RAM 67;
- one or several I/O (Input/Output) devices 64 such as for example a keyboard, a mouse, a joystick, a webcam; other modes for introduction of commands such as for example vocal recognition are also possible;

- a power source 68 ; and
- a radiofrequency unit 69.

The apparatus 6 may also optionally comprise a display device 63 of display screen type directly connected to the graphics card 62 to display synthesized images calculated and composed in the graphics card, for example live. The use of a dedicated bus to connect the display device 63 to the graphics card 62 offers the advantage of having much greater data transmission bitrates and thus reducing the latency time for the displaying of images composed by the graphics card. According to a variant, a display device is external to the apparatus 6 and is connected to the apparatus 6 by a cable or wirelessly for transmitting the display signals. The apparatus 6, for example the graphics card 62, comprises an interface for transmission or connection adapted to transmit a display signal to an external display means such as for example an LCD or plasma screen or a video-projector. In this respect, the RF unit 69 can be used for wireless transmissions.

It is noted that the word "register" used in the description of memories 621, 66, and 67 designates in each of the memories mentioned, both a memory zone of low capacity (some binary data) as well as a memory zone of large capacity (enabling a whole program to be stored or all or part of the data representative of data calculated or to be displayed).

When switched-on, the microprocessor 61 loads and executes the instructions of the program contained in the RAM 67.

The random access memory 67 notably comprises:

- in a register 670, the operating program of the microprocessor 61 responsible for switching on the apparatus 6,
- parameters 671 representative of the scene (for example modelling parameters of the object(s) of the scene, lighting parameters of the scene).

The algorithms implementing the steps of the method specific to the present disclosure and described hereafter are stored in the memory GRAM 621 of the graphics card 62 associated with the apparatus 6 implementing these steps. When switched on and once the parameters 671 representative of the 3D scene are loaded into the RAM 67, the graphic processors 620 of the graphics card 62 load these parameters into the GRAM 621 and execute the instructions of these algorithms in the form of microprograms of "shader" type using HLSL (High Level Shader Language) language or GLSL (OpenGL Shading Language) for example.

The random access memory GRAM 621 notably comprises:

- in a register 6211, the parameters representative of the scene,
- in a register 6212, appropriate parameters associated with the light sources,
- in register 6213, appropriate parameters for the shadow area(s).

According to a variant, at least some of the parameters are stored in the RAM 67 and processed by the microprocessor 61. This variant however causes greater latency time in the composition of an image comprising a representation of the environment composed from microprograms contained in the GPUs 620 as the data must be transmitted from the graphics card to the random-access memory 67 passing by the bus 65, for which the transmission capacities are generally inferior to those available in the graphics card for transmission of data from the GPUs 620 to the GRAM 621 and vice-versa.

According to another variant, the power supply 68 is external to the apparatus 6.

In an alternate embodiment, the apparatus 6 does not include any ROM but only RAM, the algorithms implementing the steps of the method specific to the present disclosure and described with regard to figures 3, 4 or 5 being stored in the RAM. According to another variant, the apparatus 6 comprises a SSD (Solid-State Drive) memory instead of the ROM and/or the RAM.

Naturally, the present disclosure is not limited to the embodiments previously described.

In particular, the present disclosure is not limited to a method of and device for determining lighting information of a 3D scene but also extends to a method for detecting shadows in a 3D scene, and to any device implementing this method and notably any devices comprising at least one CPU and/or at least one GPU.

The present disclosure also relates to a method (and a device configured) for obtaining an augmented-reality scene comprising real object(s) and added virtual object(s).

The present disclosure also relates to a method (and a device configured) for obtaining a diffuse map of a 3D scene.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of determining lighting information of a 3D scene (1), the method comprising:

    - determining (31) at least a shadow area (111) of said 3D scene (1), said at least a shadow area (111) being casted by at least a real object (11) of the 3D scene;
    - for at least a first pixel (20) of said at least a shadow area (111), casting (32) a plurality of rays (211, 212, 213) having as origin said at least a first pixel (20) through said 3D scene (1);
    - selecting (33) at least a light source (2001, 2009) of said 3D scene from a plurality of candidate light sources (2001 to 2014), a selected light source corresponding to a light source of the 3D scene crossed by at least one ray (212) of said plurality of rays, said at least one ray crossing said at least a real object (11); and
    - determining (34) said lighting information according to said selected at least a light source (2001, 2009).

2. The method according to claim 1, wherein said 3D scene comprises a first determined number of light sources, said at least a light source being selected from said first determined number of light sources, rays being casted from a second determined number of first pixels of said at least a shadow area, said second determined number being greater than or equal to said first determined number, the method further comprising:

- for each selected light source, generating (41) a visibility map comprising information on visibility of each first pixel from said selected light source;
- for each first pixel, determining (42) at least a second pixel of said 3D scene having a same reflectance property as said first pixel and belonging to an area of the 3D scene that is not in shadow;
- determining (43) light intensity of said selected at least a light source based on said visibility maps and on a ratio between a first value representative of luminance associated with said each first pixel and a second value representative of luminance associated with said at least a second pixel.

3. The method according to one of claims 1 to 2, wherein said determining of at least a shadow area comprises:

- for each pixel of at least a part of pixels located in an area surrounding said at least a real object, determining (51) at least a corresponding pixel of said 3D scene having a same reflectance property as said each pixel and being located outside said area;
- for said each pixel, determining (52) a ratio between a value representative of luminance associated with said each pixel and a second value representative of luminance associated with said at least a corresponding pixel;
- determining (53) said at least a shadow by classifying said each pixel according to the determined ratio, said each pixel belonging to said at least a shadow when said ratio is less than 1.

4. The method according to one of claims 1 to 3, further comprising for each selected light source:

- rendering shadow generated by said selected light source and said at least a real object;
- maintaining said light source as selected when the shadow generated by said light source corresponds to the determined shadow area, otherwise discarding said light source.

5. The method according to one of claims 1 to 4, wherein said at least a shadow area is determined according to a light variant feature and a light invariant feature associated with points of at least a region of interest of said 3D scene.

6. The method according to one of claims 1 to 5, further comprising inserting a virtual object at a determined position within said 3D scene and rendering a shadow casted by said virtual object according to said determined position and said lighting information.

7. An apparatus (6) configured to determine lighting information of a 3D scene, the apparatus comprising a memory (621) associated with at least one processor (620) configured to:

- determine at least a shadow area of said 3D scene, said at least a shadow area being casted by at least a real object of the 3D scene;
- for at least a first pixel of said at least a shadow area, cast a plurality of rays having as origin said at least a first pixel through said 3D scene;
- select at least a light source of said 3D scene from a plurality of candidate light sources, a selected light source corresponding to a light source of the 3D scene crossed by at least one ray of said plurality of rays, said at least one ray crossing said at least a real object; and
- determine said lighting information according to said selected at least a light source.

8. The apparatus (6) according to claim 7, wherein said 3D scene comprises a first determined number of light sources, said at least a light source being selected from said first determined number of light sources, rays being casted from a second determined number of first pixels of said at least a shadow area, said second determined number being greater than or equal to said first determined number, the at least one processor being further configured to:

- for each selected light source, generate a visibility map comprising information on visibility of each first pixel from said selected light source;
- for each first pixel, determine at least a second pixel of said 3D scene having a same reflectance property as said first pixel and belonging to an area of the 3D scene that is not in shadow;
- determine light intensity of said selected at least a light source based on said visibility maps and on a ratio between a first value representative of luminance associated with said each first pixel and a second value representative of luminance associated with said at least a second pixel.

9. The apparatus (6) according to one of claims 7 to 8, wherein the at least one processor being further configured to:

- for each pixel of at least a part of pixels located in an area surrounding said at least a real object, determine at least a corresponding pixel of said 3D scene having a same reflectance property as said each pixel and being located outside said area;
- for said each pixel, determine a ratio between a value representative of luminance associated with said each pixel and a second value representative of luminance associated with said at least a corresponding pixel;
- determine said at least a shadow by classifying said each pixel according to the determined ratio, said each pixel belonging to said at least a shadow when said ratio is less than 1.

10. The apparatus (6) according to one of claims 7 to 9, the at least one processor being further configured to, for each selected light source:

- render shadow generated by said selected light source and said at least a real object;
- maintain said light source as selected when the shadow generated by said light source corresponds to the determined shadow area, otherwise discard said light source.

11. The apparatus (6) according to one of claims 7 to 10, wherein said at least a shadow area is determined according to a light variant feature and a light invariant feature associated with points of at least a region of interest of said 3D scene.

12. The apparatus (6) according to one of claims 7 to 11, wherein said at least one processor is further configured to insert a virtual object at a determined position within said 3D scene and render a shadow casted by said virtual object according to said determined position and said lighting information.

13. A non-transitory processor readable medium having stored therein instructions for causing a processor to perform at least the steps of the method according to one of claims 1 to 6.

**Fig 1A**

**Fig 1B**

**Fig 2A**

11

21

111

10

20

**Fig 2B**

201

$V_B$

$V_1$

$V_o$

$V_n$

202

20

| 2001 | 2002 | 2003 | 2004 | 2005 | 2006 | 2007 |
|------|------|------|------|------|------|------|
| × | × | × | × | × | × | × |
| 2008 | 2009 | 2010 | 2011 | 2012 | 2013 | 2014 |
| × | × | × | × | × | × | × |

212

213

21

211

11

**Fig 2C**

20

111

**Fig 3**

```
┌─────────────────────┐
│ Generating visibility │──────  41
│        maps          │
└─────────────────────┘
           │
           ▼
┌─────────────────────┐
│  Determining second  │
│ pixels corresponding │──────  42      **Fig 4**
│   to first pixels    │
└─────────────────────┘
           │
           ▼
┌─────────────────────┐
│  Determining light   │
│ intensity of the lights│────  43
│       sources        │
└─────────────────────┘
```

```
                    ┌─────────────────────┐
                    │ Determining pairs of │──────  51
                    │ corresponding pixels │
                    └─────────────────────┘
                               │
                               ▼
     **Fig 5**        ┌─────────────────────┐
                    │  Determinig ratios of │──────  52
                    │      luminance       │
                    └─────────────────────┘
                               │
                               ▼
                    ┌─────────────────────┐
                    │  Determining shadow  │──────  53
                    │        areas         │
                    └─────────────────────┘
```

**Fig 6**

Europäisches
Patentamt

European
Patent Office

Office européen
des brevets

**EUROPEAN SEARCH REPORT**

Application Number

EP 17 30 5496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PANAGOPOULOS A ET AL: "Robust shadow and illumination estimation using a mixture model", 2009 IEEE CONFERENCE ON COMPUTER VISION AND PATTERN RECOGNITION : CVPR 2009 ; MIAMI [BEACH], FLORIDA, USA, 20 - 25 JUNE 2009, IEEE, PISCATAWAY, NJ, 20 June 2009 (2009-06-20), pages 651-658, XP031607192, ISBN: 978-1-4244-3992-8 | 1,3,5-7, 9,11-13 | INV. G06T15/50 G06T15/60 G06T15/06 G06T19/00 |
| Y | * section 1 "introduction"; page 651, right-hand column, paragraph 2 * * section 1 "introduction"; page 652, left-hand column, line 6, paragraph 3 - right-hand column, line 2 * * section 2 "background"; page 652, right-hand column, paragraph 1 * * section 3 "model description"; page 653, left-hand column * * section 3.1 "the generalized EM algorithm"; page 653, right-hand column, paragraph 1 - page 654, left-hand column * * section 3.2 "shadow detection..."; page 654, left-hand column * * section 4 "detecting shadows"; page 654, left-hand column, paragraph 1 - right-hand column, paragraph 1 * * section 4.1 "illumination-invariant cues"; page 654, right-hand column, paragraph 1 - page 655, left-hand column, paragraph 3 * * section 4.2 "identifying shadow borders"; page 655, left-hand column, paragraphs 1,2 * * section 4.2 "identifying shadow borders"; page 655, right-hand column, last -/-- | 2,4,8,10 | |

TECHNICAL FIELDS
SEARCHED (IPC)

G06T

The present search report has been drawn up for all claims

| Place of search | Date of completion of the search | Examiner |
|---|---|---|
| Berlin | 2 November 2017 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 17 30 5496

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | paragraph *<br>* section 5 "estimating k and intensity";<br>page 656, left-hand column, paragraphs 3,5<br>- right-hand column *<br>* section 6 "results";<br>page 657, left-hand column, paragraph 2 -<br>right-hand column, last paragraph *<br>* figures 1,2,4-6 *<br>----- | | |
| X | SATO I ET AL: "ILLUMINATION FROM SHADOWS",<br>IEEE TRANSACTIONS ON PATTERN ANALYSIS AND MACHINE INTELLIGENCE, IEEE COMPUTER SOCIETY, USA,<br>vol. 25, no. 3, 1 March 2003 (2003-03-01),<br>pages 290-300, XP001177783,<br>ISSN: 0162-8828, DOI:<br>10.1109/TPAMI.2003.1182093 | 1,6,7,<br>12,13 | |
| A | * section 1 "introduction";<br>page 290, left-hand column, paragraphs<br>1,3,5 - right-hand column *<br>* section 2;<br>page 291, right-hand column, paragraph 1 -<br>page 292, left-hand column, last paragraph<br>*<br>* section 3;<br>page 292, left-hand column *<br>* section 4.1;<br>page 292, right-hand column, paragraph 1 -<br>page 294, left-hand column, paragraph 1 *<br>* section 4.2;<br>page 294, right-hand column - page 295,<br>left-hand column, paragraph 2 *<br>* sections 5.2 and 5.2;<br>page 296 *<br>* figures 1-4,6,15 *<br>-----<br><br>-/-- | 2-5,8-11 | |

TECHNICAL FIELDS
SEARCHED      (IPC)

The present search report has been drawn up for all claims

| Place of search | Date of completion of the search | Examiner |
|---|---|---|
| Berlin | 2 November 2017 | Gauthier, J |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

Europäisches
Patentamt

European
Patent Office

Office européen
des brevets

**EUROPEAN SEARCH REPORT**

Application Number

EP 17 30 5496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2015/110012 A1 (TENCENT TECH SHENZHEN CO LTD [CN]) 30 July 2015 (2015-07-30) * paragraph [0033] - paragraph [0055] * * pages 1,2 * | 2,8 | |
| Y | AMATO A ET AL: "Accurate Moving Cast Shadow Suppression Based on Local Color Constancy Detection", IEEE TRANSACTIONS ON IMAGE PROCESSING, IEEE SERVICE CENTER, PISCATAWAY, NJ, US, vol. 20, no. 10, 1 October 2011 (2011-10-01), pages 2954-2966, XP011411876, ISSN: 1057-7149, DOI: 10.1109/TIP.2011.2132728 | 2,8 | |
| A | * section I "introduction"; page 2954, right-hand column, paragraphs 2,3 * * section II.B; page 2956, left-hand column * * section III; page 2957, right-hand column * * section III.B; page 2958, right-hand column - page 2959, right-hand column * * section III.c; page 2959, right-hand column, paragraph 1 - paragraph 3 * * figures 5,8,9,10 * | 3,9 | TECHNICAL FIELDS SEARCHED (IPC) |

-----

-/--

The present search report has been drawn up for all claims

| Place of search | Date of completion of the search | Examiner |
|---|---|---|
| Berlin | 2 November 2017 | Gauthier, J |

EPO FORM 1503 03.82 (P04C01)

EUROPEAN SEARCH REPORT

Application Number

EP 17 30 5496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MIKE KASPER ET AL: "Light Source Estimation with Analytical Path-tracing", ARXIV.ORG, CORNELL UNIVERSITY LIBRARY, 201 OLIN LIBRARY CORNELL UNIVERSITY ITHACA, NY 14853, 15 January 2017 (2017-01-15), pages 1-7, XP080749183, | 4,10 | |
| A | * section I; page 1, right-hand column, paragraph 2 * * sections III.A and III.B; page 2 * * section III.C; page 2, right-hand column, line 1, paragraph 1 - line 3 * * section III.D; page 3, left-hand column * * section V.A; page 4 * * figures 3,4 * | 1-3,5-9, 11-13 | |
| A | TAKUYA IKEDA ET AL: "Illumination estimation from shadow and incomplete object shape captured by an RGB-D camera", PATTERN RECOGNITION (ICPR), 2012 21ST INTERNATIONAL CONFERENCE ON, IEEE, 11 November 2012 (2012-11-11), pages 165-169, XP032329294, ISBN: 978-1-4673-2216-4 * section 1; page 165, right-hand column, line 6, paragraph 1 - line 17 * * section 2.1; page 166 * * sections 2.3 and 2.4; page 266 - page 267 * | 1-13 | TECHNICAL FIELDS SEARCHED (IPC) |

-/--

The present search report has been drawn up for all claims

| Place of search | Date of completion of the search | Examiner |
|---|---|---|
| Berlin | 2 November 2017 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 399 502 A1

# EUROPEAN SEARCH REPORT

**Europäisches Patentamt**
**European Patent Office**
**Office européen des brevets**

Application Number

EP 17 30 5496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YANG WANG ET AL: "Estimation of multiple directional light sources for synthesis of augmented reality images", GRAPHICAL MODELS., vol. 65, no. 4, 1 July 2003 (2003-07-01), pages 185-205, XP055384766, US ISSN: 1524-0703, DOI: 10.1016/S1524-0703(03)00043-2 * section 4 "shadow-based illuminant detection"; page 196 - page 197 * * figures 8,9,15,16 * | 1-13 | |
| T | SALMA JIDDI ET AL: "[POSTER] Illumination Estimation using Cast Shadows for Realistic Augmented Reality Applications", 2017 IEEE INTERNATIONAL SYMPOSIUM ON MIXED AND AUGMENTED REALITY (ISMAR-ADJUNCT), OCTOBER 9-13TH 2017, 9 October 2017 (2017-10-09), pages 1-2, XP055420541, DOI: 10.1109/ISMAR-Adjunct.2017.63 * the whole document * | 1-13 | |

TECHNICAL FIELDS SEARCHED (IPC)

The present search report has been drawn up for all claims

| Place of search | Date of completion of the search | Examiner |
|---|---|---|
| Berlin | 2 November 2017 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 399 502 A1**

## ANNEX TO THE EUROPEAN SEARCH REPORT
## ON EUROPEAN PATENT APPLICATION NO.

EP 17 30 5496

02-11-2017

| Patent document cited in search report | Publication date | Patent family member(s) | Publication date |
|---|---|---|---|
| WO 2015110012 A1 | 30-07-2015 | CN 104134230 A | 05-11-2014 |
| | | EP 3097541 A1 | 30-11-2016 |
| | | JP 2017511514 A | 20-04-2017 |
| | | KR 20160113169 A | 28-09-2016 |
| | | US 2016232707 A1 | 11-08-2016 |
| | | WO 2015110012 A1 | 30-07-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ARIEF et al.** Realtime Estimation of Illumination Direction for Augmented Reality on Mobile Devices. *CIC,* 2012
- **SINGH et al.** A Survey on Shadow Detection Methods. *International Journal of Advanced Research in Computer Engineering & Technology,* April 2014, vol. 3 (4

- **J. ZHU ; K.G.G. SAMUEL ; S.Z. MASOOD ; M.F. TAPPEN.** Learning to recognize shadows in monochromatic natural images. *CVPR,* 2000